# EUROPEAN PATENT APPLICATION

(11) **EP 4 506 279 A1**
(43) Date of publication of application: **12.02.2025**
(21) Application number: 23861646.0
(22) Date of filing: 13.06.2023
(51) Int. Cl.: B65G 13/06, B65G 39/10, B65G 43/00, G05B 9/03

(54) **CONVEYOR SYSTEM**

(71) Applicant: Kyowa Manufacturing Co., Ltd., Kasai-shi, Hyogo 6752364 (JP)
(72) Inventor: YAMAMOTO, Shinya, Kasai-shi, Hyogo 675-2364 (JP); SAEGUSA, Yusuke, Kasai-shi, Hyogo 675-2364 (JP)
(74) Representative: Behr, Wolfgang
(86) International application number: PCT/JP2023/021941
(87) International publication number: WO 2024/257224

(57) **Abstract**

A conveyor system in the present invention includes a motorized conveyor roller, i.e., a CM roller, and a switching device. The C-M roller includes a control part located in a roller tube for controlling a motor in accordance with a control content carried by a control signal received by a communication part and outputs the control content carried by the control signal received by the communication part to the switching device. The switching device stores the control content. The C-M roller outputs a communication irregularity to the switching device when the communication irregularity is determined to exist. The switching device causes the control part to control the motor in accordance with the stored control content in response to the communication irregularity.

## Description

### Technical Field

The present invention relates to a conveyor system including: a motorized conveyor roller for use in a conveyor device; and a switching device that switches a control source.

### Background Art

Conveyor devices have been widely used to transfer target objects on, for example, production sites and distribution sites. The conveyor devices are broadly classified into roller conveyor devices and belt conveyor devices. Such a roller conveyor device includes a plurality of rollers juxtaposed in a direction to transfer or convey a target object or conveyed object on a transfer passage or conveyance passage defined by the rollers. Such a belt conveyor device includes a plurality of rollers juxtaposed in a direction and a conveyance belt resting on the rollers to transfer a target object on a transfer passage defined by the conveyance belt. Each of the rollers in each of the roller conveyor device and the belt conveyor device is provided with a motor therein, and the rollers include a motorized roller (driving roller) that rotates with a drive force generated by the motor and a roller (driven roller or a free roller) that rotates along with the rotation of the motorized roller via, for example, the resting belt and the target object. The motor in the motorized roller is driven by a motor driving device (motor control device) attached to an external part of the motorized roller, e.g., a conveyor frame member (see Patent Literature 1 and Patent Literature 2). Incorporation of the motor driving device into the motorized roller simplifies the conveyor device.

By contrast, in recent years, the Internet of Things (IoT) has developed connectivity of various things to a communication network. Known ways of connecting the things to the communication network include a way called "IO-Link". The IO-Lnk represents an I/O connection technology standardized by IEC 61131-9 for communication with a device and making the device have a communication interface complying with an IO-Link standard to achieve bidirectional transmission of a communication signal with an upstream system. The device having the communication interface complying with the IO-Link standard is referred to as an "IO-Link device". The IO-Link device has a hub function and is connected to an IO-Link master device connected to the communication network so that the IO-Link device communicates with the upstream system via the IO-Link master device and the communication network.

Incidentally, defining the motor driving device as the IO-Link device is considered to make the upstream system perform a centralized control of the motor driving device via the IO-Link master device and the communication network. In this case, when a communication irregularity or communication failure occurs in the communication network, the conveyor device may stop or may operate under no control.

### Citation List

### Patent Literature

Patent Literature 1: Japanese Unexamined Patent Publication No. 2014-068501
Patent Literature 2: Japanese Unexamined Patent Publication No. 2018-177441

### Summary of Invention

The present invention has been accomplished in consideration of the above-described circumstances, and has an object of providing a conveyor system that enables a conveyor device to operate in a predetermined control manner even when a communication irregularity occurs.

A conveyor system according the present invention includes a motorized conveyor roller and a switching device. The motorized conveyor roller includes a control part located in a roller tube for controlling a motor in accordance with a control content carried by a control signal received by a communication part, and outputs the control content carried by the control signal received by the communication part to the switching device. The switching device stores the control content. The motorized conveyor roller outputs a communication irregularity to the switching device when the communication irregularity is determined to exist. The switching device causes the control part to control the motor in accordance with the stored control content when receiving an input of the communication irregularity. The conveyor system enables the conveyor device to operate in a predetermined control manner even when a communication irregularity occurs.

The foregoing, and the object, features, and advantages of the present invention will be further clarified by the following detailed description and the accompanying drawings.

### Brief Description of Drawings

Fig. 1 is a plan view of a conveyor device in an embodiment.
Fig. 2 is an explanatory partial cross-sectional view of a configuration of a motorized conveyor roller for use in the conveyor device.
Fig. 3 is a block diagram explaining a configuration including a communication control processor of the motorized conveyor roller and a switching device.
Fig. 4 is a circuit diagram showing an example circuit configuration of the communication control processor.
Fig. 5 includes graphs for respectively explaining level shifters or Level Shifters 54, 55 in the circuit diagram in Fig. 4.
Fig. 6 is a flowchart showing an operation by the communication control processor.
Fig. 7 is a first sequence diagram showing an operation of each of a hub (IO-Link master device) MS/a conveyor management device SV, the communication control processor 4, and the switching device CD.
Fig. 8 is a second sequence diagram showing an operation of each of the hub (IO-Link master device) MS/the conveyor management device SV, the communication control processor 4, and the switching device CD.
Fig. 9 is a plan view of a conveyor device in a first modified embodiment.

### Description of Embodiments

Hereinafter, one or more embodiments of the present invention will be described with reference to the accompanying drawings. However, the present invention should not be limited to the disclosed embodiments. Elements denoted by the same reference numerals in the drawings have the same configuration and, therefore, repeated descriptions will be appropriately omitted. In the present specification, elements are denoted by a same reference numeral when being referred to collectively, and are denoted by a same reference numeral accompanied by a different respective reference character when being referred to individually.

A conveyor system in an embodiment includes a motorized conveyor roller and a switching device. In the embodiment, the conveyor system further includes a conveyor device which includes a roller conveyor device. The motorized conveyor roller includes: a communication part: a roller tube: a pair of support shafts located opposite to each other for rotatably supporting the roller tube; a motor located in the roller tube for generating a drive force to rotate the roller tube; a control part located in the roller tube for controlling the motor in accordance with a control content carried by a control signal received by the communication part; and a first processing part located in the roller tube for outputting the control content carried by the control signal received by the communication part to the switching device. The switching device includes: a storage part; and a second processing part that stores the control content in the storage part when receiving an input of the control content from the motorized conveyor roller. The first processing part further determines whether a communication irregularity exists, and outputs the communication irregularity to the switching device when the communication irregularity is determined to exist, that is, when it is determined that there is the communication irregularity. The second processing part further causes the control part to control the motor in accordance with the stored control content when receiving an input of the communication irregularity from the motorized conveyor roller. The roller conveyor device belonging to the conveyor device includes a plurality of rollers juxtaposed in a direction to transfer a target object on a transfer passage defined by the rollers. The rollers include one or more of the motorized conveyor rollers. Hereinafter, the motorized conveyor roller, the switching device, and the conveyor device will be described in further detail, and accordingly, the conveyor system will be described in further detail.

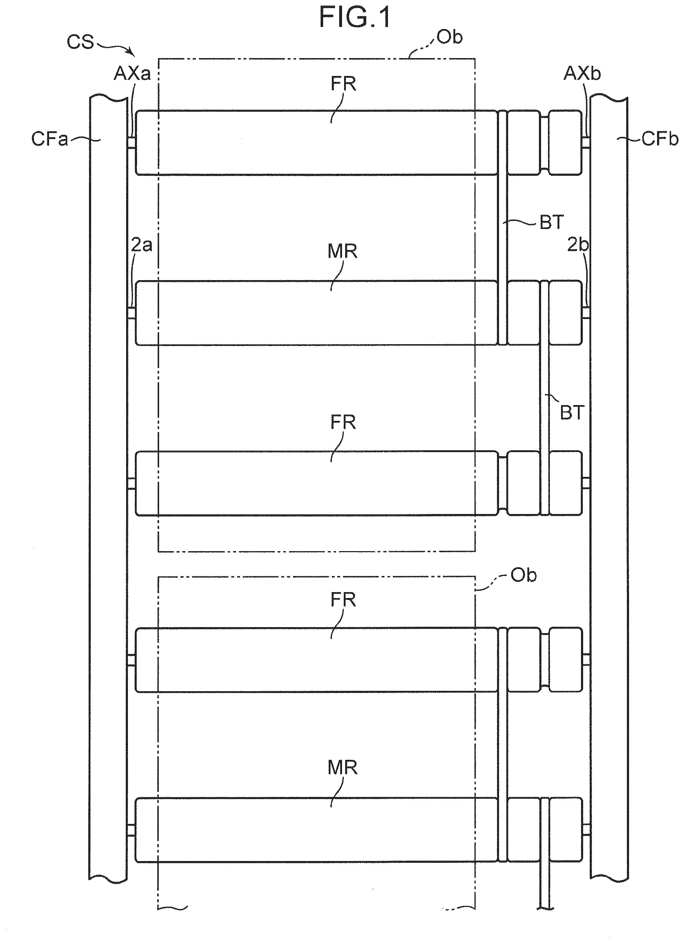

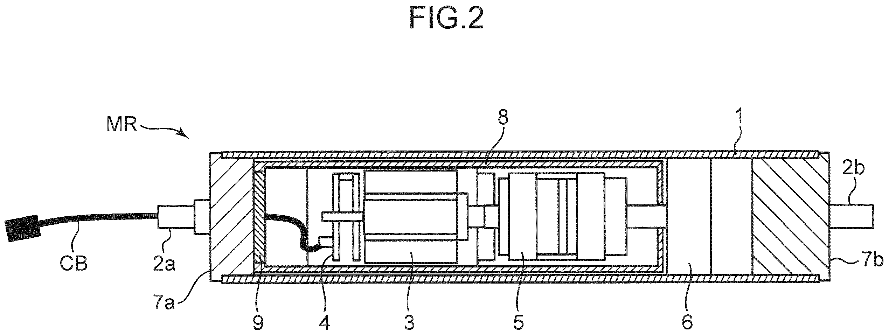

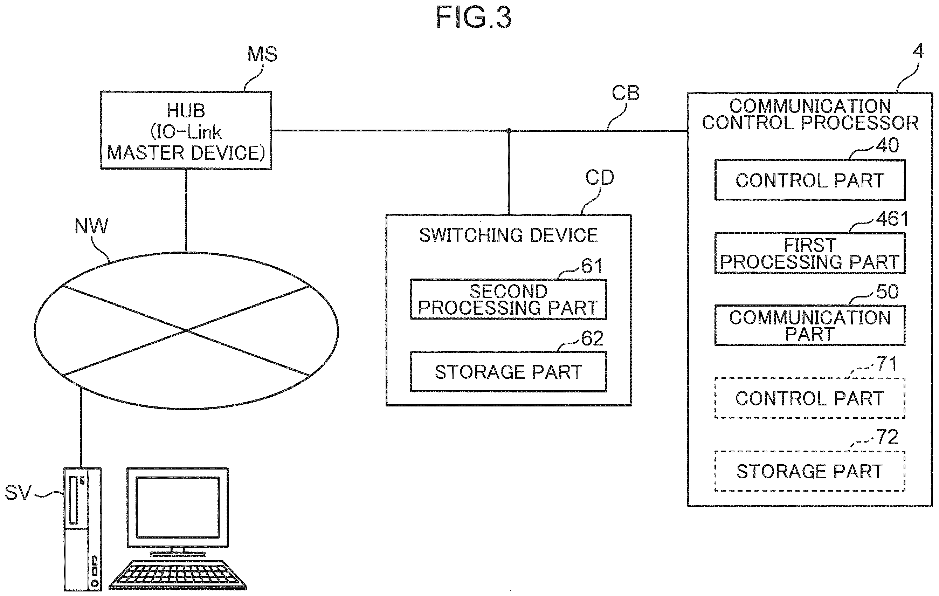

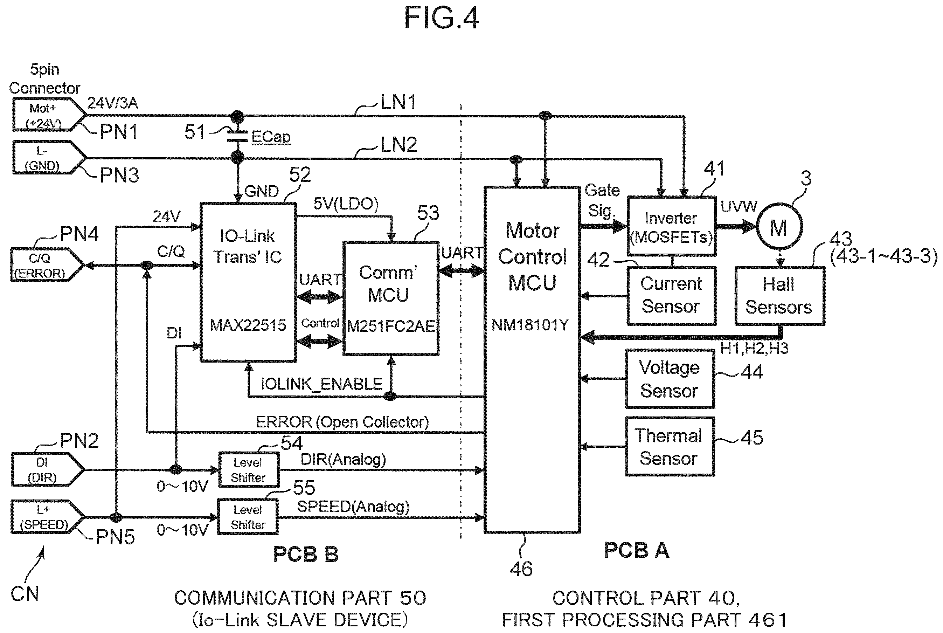

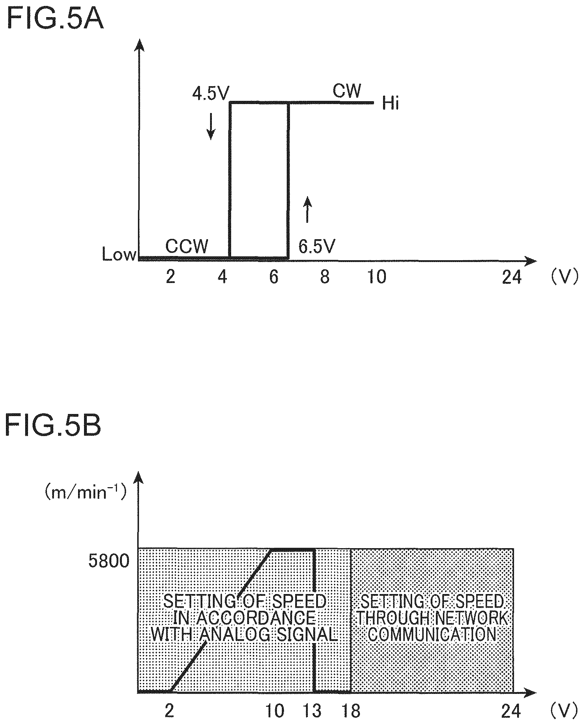

Fig. 1 is a plan view of a conveyor device in the embodiment. Fig. 2 is an explanatory partial cross-sectional view of a configuration of a motorized conveyor roller for use in the conveyor device. Fig. 3 is a block diagram explaining a configuration including a communication control processor of the motorized conveyor roller and a switching device. Fig. 3 further shows a configuration in a second modified embodiment to be described later by using a dashed line. Fig. 4 is a circuit diagram showing an example circuit configuration of the communication control processor. Fig. 5 includes graphs for respectively explaining level shifters 54, 55 in the circuit diagram in Fig. 4. Fig. 5A is a graph for explaining the level shifter 54 with a horizontal axis denoting an input voltage and a vertical axis denoting an output voltage associated with a set rotation direction or target rotation direction, that is, associated with a clockwise rotation CW or a counterclockwise rotation CCW. Fig. 5B is a graph for explaining the level shifter 55 with a horizontal axis denoting an input voltage and a vertical axis denoting an output voltage associated with a set speed or target speed [min⁻¹], that is, associated with a set rotation speed or target rotation speed [rpm].

A conveyor device CS in the embodiment includes, for example, a roller conveyor device CS including a plurality of rollers MR, FR juxtaposed in a direction to transfer a target object or conveyed object Ob on a transfer passage or conveyance passage defined by the rollers MR, FR. Fig. 1 shows the object Ob with a long dashed double-short dashed line.

More specifically, the roller conveyor device CS includes a pair of first and second conveyor frame members CFa, CFb, one or more motorized conveyor rollers MR, one or more driven rollers FR, and one or more belts BT.

Each of the first and second conveyor frame members CFa, CFb is long in one direction of rotatably supporting the motorized conveyor rollers (motorized rollers, hereinafter, each appropriately abbreviated as a "C-M roller") MR and the driven rollers (free rollers) FR, and the frame members face each other at a predetermined distance or first distance in a direction perpendicularly intersecting the one direction and extend in parallel to each other in the one direction. The first distance is suitable for a size of the object Ob to be conveyed by the roller conveyor device CS, and a length of each of the C-M roller MR and the driven roller FR is set depending on the first distance. Each of the first and second conveyor frame members CFa, CFb is made of ferrous metal (including an alloy), e.g., a steel plate cold (SPC) member, and has, for example, a substantially squared C-shape (corresponding to the shape of the letter "E" excluding the center horizontal line "-") in cross section to increase stiffness. Each of the first and second conveyor frame members CFa, CFb has through holes (not shown) at predetermined distances or second distances in the one direction to receive associated first and second support shafts 2a, 2b of each C-M roller MR therein and receive associated first and second support shafts AXa, AXb of each driven roller FR respectively, the shafts being described later. The first and second support shafts 2a, 2b of the C-M roller MR are inserted in the associated through holes in the first and second conveyor frame members CFa, CF and fastened to the first and second conveyor frame member CFa, CF by fasteners (not shown) respectively. The first and second support shafts AXa, AXb of the driven roller FR are inserted in, for example, associated through holes in the first and second conveyor frame members CFa, CFb, and fixed to the first and second conveyor frame members CFa, CFb by fitting nuts to screw threads at the first and second support shafts AXa, AXb.

The C-M rollers MR are arranged in the one direction by sandwiching two driven rollers FR juxtaposed in the one direction therebetween. Specifically, a predetermined number of C-M rollers MR are arranged respectively in every third rows in the example shown in Fig. 1, and two driven rollers FR are juxtaposed between the two adjacent C-M rollers in the one direction. Therefore, the C-M rollers MR and the driven rollers FR are parallel to each other in the direction perpendicularly intersecting the one direction. Among the C-M rollers and the driven rollers FR, one C-M roller MR is connected to two driven rollers FR being adjacent to each other across the CM roller in the one direction by the one or more belts BT wound on respective one ends of the rollers. When the one C-M roller MR rotates, the belt BT conveys the rotation of the one C-M roller MR to the two driven rollers FR to rotate the two driven rollers FR. This allows the target object or conveyed object Ob on the C-M rollers MR and the driven rollers FR to be transferred or conveyed.

Such a motorized conveyor roller MR for use in the roller conveyor device CS has, for example, a configuration shown in Fig. 2. More specifically, the C-M roller MR includes a roller tube 1 having a cylindrical shape with a predetermined length or first length and made of ferrous metal (including an alloy), e.g., carbon steel for a machine structure. The roller tube 1 has one end to which a first cap member 7a is fixedly attached to close the one end, and another end to which a second cap member 7b is fixedly attached to close another end. The first cap member 7a is provided with a first bearing (not shown) therein. The first bearing rotatably supports the first support shaft 2a via a connection member 9 having a cylindrical shape and made of ferrous metal (including an alloy), e.g., carbon steel for a machine structure (e.g., S45C). The connection member 9 receives the first support shaft 2a extending therethrough and is fixedly attached to the first support shaft 2a. The first cap member 7a has a through hole penetrating the cap along a central axis of the roller tube 1 to receive the first support shaft 2a extending therein via the connection member 9. Similarly, the second cap member 7b is provided with a second bearing (not shown) therein. The second bearing rotatably supports the second support shaft 2b. The second cap member 9b has a through hole penetrating the cap along the central axis to receive the second support shaft 2b extending therein. The first support shaft 2a is a pillar like member made of, for example, ferrous metal (including an alloy) and having a hollow for receiving a cable CB connected to a communication control processor 4 to be described later. The second support shaft 2b is a columnar member.

In this configuration, the roller tube 1 is rotatably supported by the first and second support shafts 2a, 2b respectively protruding from the first and second conveyor frame members CFa, CFb.

The C-M roller MR includes a motor 3 located in the roller tube 1. More specifically, the motor 3 is accommodated in an inner frame 8 made of metal (including an alloy), e.g., aluminum, and having a cylindrical shape with a predetermined length or second length and a diameter smaller than the diameter of the roller tube 1. The inner frame 8 is accommodated in the roller tube 1 with a gap from an inner surface of the roller tube 1 in such a manner that the roller tube 1 is rotatable about the inner frame 8.

The inner frame 8 has another portion at another position for fixedly accommodating a speed reducer 5 formed of a planetary gear or other gear in the inner frame 8. The speed reducer 5 has an output shaft fixedly coupled to an intermediate plate 6 having a columnar shape. The intermediate plate 6 has an outer surface to be fixedly connected to the inner surface of roller tube 1. The motor 3 fixedly accommodated in the inner frame 8 is arranged on one side of the speed reducer 5. The motor 3 has an output shaft coupled to an input part of the speed reducer 5. In this configuration, rotation of the output shaft of the motor 3 makes the intermediate plate 6 rotate via the speed reducer 5, and the rotation of the intermediate plate 6 makes the roller tube 1 rotate. As described above, the motor 3 is located in the roller tube 1 via the inner frame 8 and generates a drive force to rotate the roller tube 1. The motor 3 may be a motor of any appropriate type. In the example shown in Fig. 2, the motor 3 is a motor of an inner rotor type with a radial gap, and includes: a rotor having a plurality of permanent magnets; and a stator having a plurality of coils. The coils become electrically conductive and generate a rotation magnetic field that interacts with a magnetic field of each permanent magnet, so that the rotor rotates and the output shaft rotates.

The inner frame 8 has one end to which the connection member 9 is fixedly attached to close the one end. In this way, the inner frame 8 is fixed to the first support shaft 2a via the connection member 9.

The communication control processor 4 is arranged between the motor 3 and the connection member 9. The communication control processor 4 serves as a circuit for communicating with an external device, inputting and outputting data into and from the switching device CD, and controlling and driving the motor 3. More specifically, the communication control processor 4 is connected to a hub (Hub) MS and the switching device CD by the cable CB as shown in Fig. 3, and includes a control part 40, a first processing part 461, and a communication part 50. In the embodiment, the external device represents a conveyor management device (upstream device) SV that centrally manages each C-M roller MR. The conveyor management device SV includes, for example, a computer having a communication function, and transmits a control signal carrying, for example, a control content for the motor 3 of the C-M roller. The conveyor device CS is typically provided with relatively many C-M rollers, and thus, the centralized management of the C-M rollers MR by the conveyor management device SV leads to achievement of effective management of the rollers. The hub MS is connected to the conveyor management device SV via a communication network NW, e.g., a local area network (LAN) or a wide area network (WAN).

The communication part 50 communicates with an external device. In the embodiment, the C-M roller MR is communicably connected to the conveyor management device SV by the communication part 50 via the cable CB, the hub MS, and the communication network NW to communicate with the conveyor management device SV The communication part 50 includes an interface that selectively executes either bidirectional communication or data input and output. The communication part 50 is configured to bidirectionally communicate with the conveyor management device SV one on one and perform the data input and output with the switching device CD. The communication part 50 includes, for example, an interface complying with the IO-Link standard. In this case, the hub MS is configured to include an IO-Link master device.

The control part 40 controls the motor 3 in accordance with the control content carried by the control signal received by the communication part 50. For instance, the control part 40 controls the motor 3 to be started, increase a speed, maintain the speed, reduce the speed, stop or suspend, and to give a clockwise rotation CW or a counterclockwise rotation CCW in accordance with the control content. Thus, the control signal carries the control content including a set speed or target speed [min⁻¹], i.e., a set rotation speed or target rotation speed [rpm] (including the set speed 0 [min⁻¹]), and a set rotation direction or target rotation direction.

The first processing part 461 outputs the control content carried by the control signal received by the communication part 50 to the switching device CD.

The circuit of the communication control processor 4 will be described in detail later.

The switching device CD switches a control source depending on a communication state of the communication part 50 in such a manner as to switch the control source to the conveyor management device SV so that the control part 40 controls the motor 3 in accordance with a control content carried by a control signal from the conveyor management device SV for a communication regularity which allows the communication part 50 to send and receive a communication signal, and switch the control source to the switching device CD so that the control part 40 controls the motor 3 in accordance with a control content stored in the switching device CD for a communication irregularity which hinders the communication part 50 from sending and receiving a communication signal, e.g., a communication irregularity or communication failure in the communication network NW. The switching device CD includes, for example, a second processing part 61 and a storage part 62 as shown in Fig. 3, and is further configured to include, for example, a single-chip computer. The storage part 62 stores data of a control content and the like. The second processing part 61 stores the control content in the storage part 62 when receiving an input of the control content from the CM roller MR.

In the embodiment, the first processing part 461 in the communication control processor 4 further determines whether a communication irregularity exists, and outputs the communication irregularity to the switching device CD when the communication irregularity is determined to exist. The switching device CD further causes the control part 40 to control the motor in accordance with the control content stored in the storage part 62 when receiving an input of the communication irregularity from the C-M roller MR.

The circuit of the communication control processor 4 will be described in detail. As shown in Fig. 4, the communication control processor 4 includes, for example, a capacitor 51, an IO-Link Trans'IC (hereinafter, appropriately abbreviated as a "Trans'IC") 52, a Comm'MCU 53, the level shifters (hereinafter, appropriately abbreviated as "Shifter"s) 54, 55, an inverter or Inverter 41, an electric current sensor or Current Sensor 42, a hall sensor or Hall Sensor 43, a voltage sensor or Voltage Sensor 44, a thermal sensor or Thermal Sensor 45, a Motor Control MCU (hereinafter, appropriately abbreviated as an "MC-MCU") 46, and a connector CN having five pins from first to fifth pins or Pins (terminals) PN1 to PN5, and the communication control processor is connected to the cable CB by the connector CN.

The first pin PN1 is an electric power terminal and is connected to a power source line LN1, and the third pin PN3 is a ground terminal and is connected to a grounding line LN2. Each of the first and third pins PN1, PN3 receives a supply of electric power to drive the motor 3. The first and third pins PN1, PN3 are respectively connected to two power source lines in the cable CB. In the embodiment, direct current power is supplied at 24[V] and 3[A]. A smoothing capacitor 51 is arranged between the power source line LN1 and the grounding line LN2 to connect the lines to each other. Each of the power source line LN1 and the grounding line LN2 is connected to the MC-MCU 46 and the inverter 41 to supply the direct current power to both the elements. The Trans'IC 52 is connected to each of the fifth pin PN5 and the grounding line LN 2 to supply the direct current power from the fifth pin PN5 at, for example, 24[V]. The Comm'MCU 53 receives a supply of the direct current power at, for example, 5[V] from the Trans'IC 52.

The MC-MCU 46 includes, for example, an IC chip given the model number NM18101Y and is connected to the Trans'IC 52, the Comm'MCU 53, the Shifters 54, 55, the inverter 41, the electric current sensor 42, the hall sensor 43, the voltage sensor 44, and the thermal sensor 45. The electric current sensor 42 measures an electric current of the electric power supplied to the motor 3 and outputs an electric current value in a result of the measurement to the MC-MCU 46. The hall sensor 43 measures a magnetic force or magnetic flux density to measure a rotor position in the motor 3, and outputs the magnetic force in a result of the measurement to the MC-MCU 46. The hall sensor 43 includes, for example, unillustrated three hall sensors 43-1 to 43-3 arranged on a periphery of the rotor at intervals of 120° in a circumferential direction thereof in the motor 3. The MC-MCU 46 obtains the rotor position at every 60° on the basis of magnetic forces H1 to H3 shown respectively in measurement results from these hall sensors. The voltage sensor 44 measures a voltage of the electric power supplied to the motor 3 and outputs a voltage value in a result of the measurement to the MC-MCU 46. The thermal sensor 45 measures a temperature of the motor 3, i.e., an ambient temperature of the motor 3, and outputs the temperature in a result of the measurement to the MC-MCU 46. The MC-MCU 46 controls the motor 3 by controlling the inverter 41 on the basis of: the electric current value measured by the electric current sensor 42; the voltage value measured by the voltage sensor 44; and the rotor position obtained on the basis of the measurement results from the hall sensor 43 so as to attain a control content from the Comm'MCU 53 including a set speed or target speed and a set rotation direction or target rotation direction, or attain a control content from the Shifters 54, 55 including a set speed or target speed and a set rotation direction or target rotation direction. The inverter 41 converts the supplied direct current power into three-phase electric power having a U-phase, a V-phase, and a W-phase under the control of the MC-MCU 46, and outputs the converted three-phase electric power to the motor 3. The motor 3 then operates in accordance with the control content. The MC-MCU 46 controls the motor 3 via the inverter 41 to stop or suspend the motor 3 when the temperature in the result of the measurement by the thermal sensor 45 exceeds a preset threshold or temperature determination threshold. This succeeds in preventing a progress of heating in the C-M roller MR.

The fourth pin PN4 is a signal terminal and is connected to each of the Trans'IC 52 and the MC-MCU 46. The MC-MCU 46 determines whether a communication irregularity exists. In a case of a communication regularity, a communication signal is input into or output from the fourth pin PN4, and the communication signal is further input into or output from the Trans'IC 52. The MC-MCU 46 then outputs a control content, and the control content is output to the switching device CD. In a case of a communication irregularity, the MC-MCU 46 outputs a signal showing the communication irregularity, i.e., an irregularity notification signal, to the fourth pin PN4, and the irregularity notification signal is output to the switching device CD. In a case of a communication recovery, that is, in a case where a communication regularity is determined to recover after the determination that the communication irregularity exists, the MC-MCU 46 outputs a signal showing the communication recovery, i.e., a recovery notification signal, to the fourth pin PN4, and the recovery notification signal is output to the switching device CD. The MC-MCU 46 may directly determine whether a communication irregularity exists. In the embodiment using the IO-Link, however, the hub MS of the IO-Link master device primarily detects whether a communication irregularity exists in the communication network NW and notifies the Trans'IC 52 of a result of the detection, and the Trans'IC 52 notifies the MC-MCU 46 of the result via the Comm'MCU 53. The MC-MCU 46 having received the notification determines whether the communication irregularity exists. The hub MS of the IO-Link master device sends a communication signal and retries the sending for no acknowledgement reply, and then determines the communication irregularity to exist when the retrying ends in failure twice. By contrast, the hub MS of the IO-Link master device determines a communication recovery in a success of a communication by sending a communication signal and receiving an acknowledgement reply after a lapse of a predetermined time and notifies the Trans'IC 52 of a result of the determination, and the Trans'IC 52 notifies the MC-MCU 46 of the result via the Comm'MCU 53. The MC-MCU 46 having received the notification determines the communication recovery.

The MC-MCU 46 outputs an enable signal to each of the Trans'IC 52 and the Comm'MCU 53 to validate or invalidate each of the Trans'IC 52 and the Comm'MCU 53.

The Trans'IC 52 includes, for example, an IC chip given the model number MAX22515 and is connected to each of the fourth pin PN4 and the Comm'MCU 53. The Trans'IC 52 sends and receives a communication signal in complying with the IO-Link standard, and outputs a communication content (e.g., a control content, a communication irregularity, and a communication regularity) carried by the communication signal to the MC-MCU 46 via the Comm'MCU 53.

The Comm'MCU 53 includes, for example, an IC chip given the model number M251FC2AE and is connected to each of the Trans'IC 52 and the MC-MCU 46. A protocol to be input into or output from the Trans'IC 52 in a universal asynchronous receiver/transmitter (UART) frame differs from a protocol in a UART frame to be input into or output from the MC-MCU 46. Hence, the Comm'MCU 53 is configured to mutually convert the protocols in the UART frames into each other between the Trans'IC 52 and the MC-MCU 46, so that the Comm'MCU 53 enables the Trans'IC 52 and the MC-MCU 46 to perform data input and output therebetween.

The second pin PN2 is a signal terminal connected to an input terminal of the Shifter 54, and an output terminal of the Shifter 54 is connected to the MC-MCU 46. The second pin PN2 receives an input of a signal showing a set rotation direction, i.e., a set rotation direction signal, from the switching device CD. The set rotation direction signal indicates a voltage having a voltage value associated with the set rotation direction. In the embodiment, for example, in a case where the set rotation direction indicates the clockwise rotation CW as shown in Fig. 5A, the set rotation direction signal indicates a voltage of 6.5[V] or higher. The Shifter 54 outputs a high-level (Hi level) voltage for the set rotation direction indicating the clockwise rotation CW on receipt of an input of the voltage of 6.5[V] or higher (6.5 to 24[V]), and the high-level voltage is input into the MC-MCU 46. Consequently, the MC-MCU 46 recognizes that the set rotation direction in the control content indicates the clockwise rotation CW. By contrast, in a case where the set rotation direction indicates the counterclockwise rotation CCW, the set rotation direction signal indicates a voltage of 4.5[V] or lower. The Shifter 54 outputs a low-level (Low level) voltage for the set rotation direction indicating the counterclockwise rotation CCW on receipt of an input of the voltage of 4.5[V] or lower (0 to 4.5[V]), and the low-level voltage is input into the MC-MCU 46. Consequently, the MC-MCU 46 recognizes that the set rotation direction in the control content indicates the counterclockwise rotation CCW.

The second pin PN 2 is connected to the Trans'IC 52 in complying with the IO-Link as well.

The fifth pin PN5 is a signal terminal connected to an input terminal of the Shifter 55, and an output terminal of the Shifter 55 is connected to the MC-MCU 46. The fifth pin PN5 selectively receives either a signal showing a control source, i.e., a control source signal, or a signal showing a set speed, i.e., a set speed signal, from the switching device CD. The control source signal indicates a voltage having a voltage value for the conveyor management device SV serving as a control source, i.e., a control source for a communication regularity. In the embodiment, for example, as shown in Fig. 5B, the control source signal indicates a voltage of 18[V] or higher (18 to 24[V]). The shifter 55 outputs no signal on receipt of an input of the voltage of 18[V] or higher. The switching device CD outputs, to the fifth pin PN5, the voltage of 18[V] or higher (18 to 24[V]) at default in operation. The set speed signal indicates a voltage having a voltage value associated with the set speed. In the embodiment, for instance, as shown in Fig. 5B, a voltage value associated with a set speed is predefined in a voltage range of 2 to 10[V]. A voltage value associated with a rotation speed is predefined in a speed range from 0 to a maximum speed [m/min⁻¹]. The Shifter 55 outputs a voltage having a voltage value associated with a rotation speed agreeing with the set speed on receipt of an input of a voltage having a voltage value associated with the set speed. Further, the set speed is predefined to reach a maximum speed at 10 to 13[V]. The Shifter 55 outputs a voltage having a voltage value associated with the maximum speed on receipt of an input of the voltage of 10 to 13[V]. In this manner, the MC-MCU 46 receives an input of a voltage having a voltage value associated with the rotation speed agreeing with the set speed. Consequently, the MC-MCU 46 recognizes the set speed in the control content. Although the communication control processor 4 does not explicitly show that the switching device CD serves as the control source, the input of the voltage value associated with the set speed within a voltage range from 2 to 13[V] into the fifth pin PN5 allows the communication control processor 4 to imply this serving.

The fifth pin PN2 is connected to the Trans'IC 52 as well, and receives a supply of direct current power at a voltage of 18[V] or higher, preferably 24[V], in the case of a communication regularity.

The fourth, second, and fifth pins PN4, PN2, PN5 are respectively connected to three signal lines in the cable CB.

In the communication control processor 4 having the circuit, the Trans'IC 52, the Comm'MCU 53, and the Shifters 54, 55 serve as an example of the communication part 50. The inverter 41, the electric current sensor 42, the hall sensor, the voltage sensor 44, the thermal sensor 45, and the MC-MCU 46 serve as an example of the control part 40. The MC-MCU 46 serves as an example of the first processing part 461, and the first processing part 461 operatively constitutes the MC-MCU 46 by execution of a program.

In addition, a heat sink (not shown) may be provided to dissipate heat which is generated in the communication control processor 4. Further, the communication control processor 4, the heat sink, and the connection member 9 may be connected to one another in this order. In this configuration, the heat generated in the communication control processor 4 is sequentially conducted from the communication control processor 4 to the heat sink, the connection member 9, the first support shaft 2a, and the first conveyor frame member CFa in this order to be dissipated from the first conveyor frame member CFa.

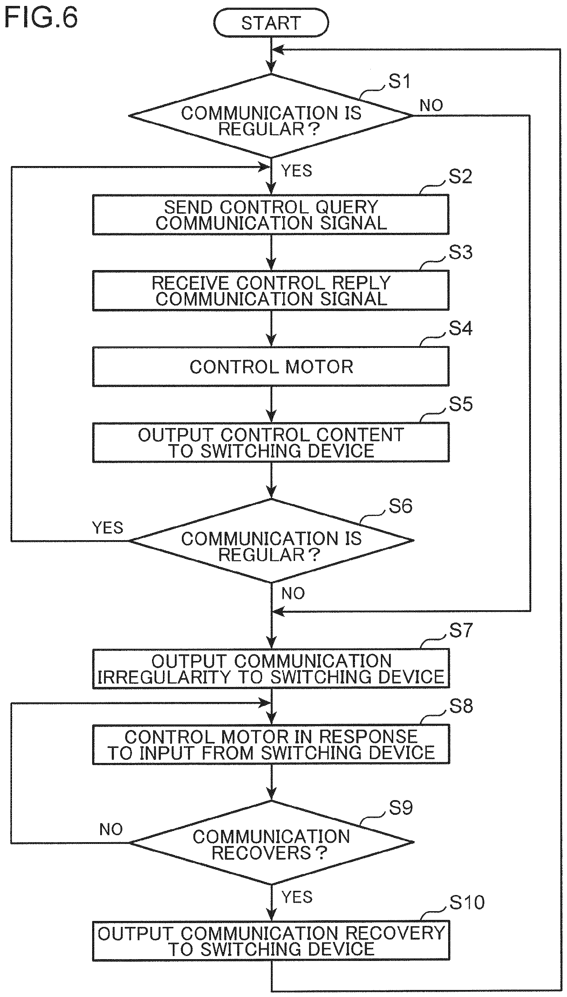

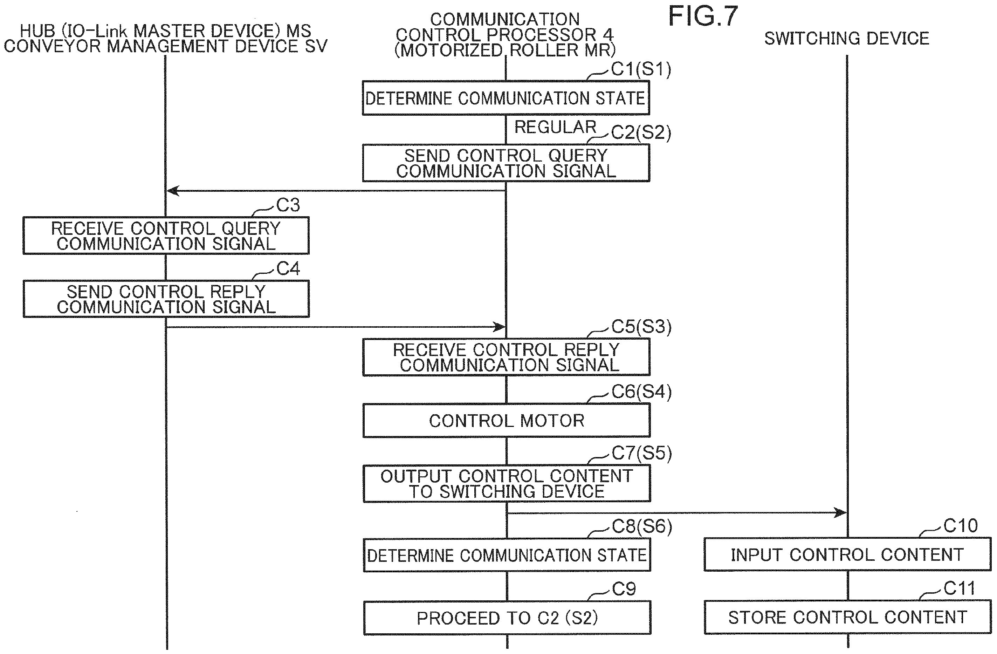

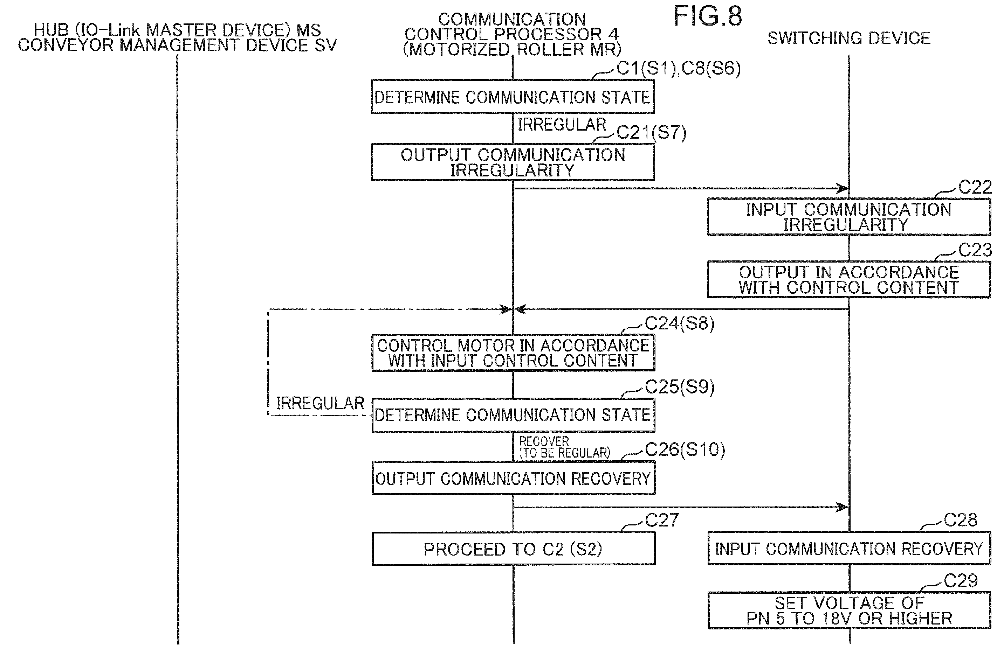

Next, an operation in the embodiment will be described. Fig. 6 is a flowchart showing an operation by the communication control processor. Fig. 7 is a first sequence diagram showing an operation of each of the hub (IO-Link master device) MS/the conveyor management device SV, the communication control processor 4, and the switching device CD. Fig. 8 is a second sequence diagram showing an operation of each of the hub (IO-Link master device) MS/the conveyor management device SV, the communication control processor 4, and the switching device CD.

In the conveyor system having the configuration, the switching device CD outputs a voltage of 18[V] or higher (18 to 24[V]) at default to the fifth pin PN5 in activation. In Fig. 6 to Fig. 8, the communication control processor 4 determines whether a communication is regular or not with reference to a voltage value of the fifth pin PN 5 (S1, C1). When a result of the determination shows a communication regularity (Yes), the communication control processor 4 sends a communication signal showing a query about a control content to the conveyor management device SV, i.e., a control query signal (S2, C1). By contrast, when the result of the determination shows a non-communication regularity or communication irregularity (No), the communication control processor 4 subsequently executes step S7 (C21).

The control query signal is sent to the conveyor management device SV via the IO-Link master device MS and the communication network NW, and the conveyor management device SV receives the control query signal (C3). The conveyor management device SV sends a communication signal, i.e., a control reply communication signal, carrying a control content for a CM roller MR serving as a sending source to the communication control processor 4 of the C-M roller at the sending source.

The control reply communication signal is sent to the communication control processor 4 via the communication network NW and the IO-Link master device MS, and the communication control processor 4 receives the control reply communication signal (S3, C5).

On receipt of the control reply communication signal, the communication control processor 4 controls the motor 3 in accordance with the control content carried by the received control reply communication signal (S4, C6), outputs (notifies) the control content carried by the received control reply communication signal to the switching device (S5, C7), and determines whether the communication is regular or not with reference to the voltage value of the fifth pin PN 5 (S6, C8). When a result of the determination shows a communication regularity (Yes), the communication control processor 4 returns the process to step S2 (C2) (C9). In this manner, a sequence of steps S2 to S6 is repeated, and in the case of the communication regularity, the communication control processor 4 controls the motor 3 through a communication with the conveyor management device SV via the IO-Link master device MS and the communication network NW. By contrast, when the result of the determination shows a non-communication regularity or a communication irregularity (No), the communication control processor 4 subsequently executes step S7 (C21). The communication control processor 4 determines the non-communication regularity or communication irregularity on receipt of the communication irregularity from the hub MS of the IO-Link master device under the control of the motor 3.

By contrast, the control content output to the switching device CD in step S5 (C7) and carried by the received control reply communication signal is input into the switching device CD, and the switching device CD receives the input control content (C10). The second processing part 61 stores the input control content in the storage part 62 (C11).

In step S7 (C21), the communication control processor 4 outputs the irregularity notification signal showing the communication irregularity to the switching device CD.

The irregularity notification signal is input into the switching device CD, and the switching device CD receives the input irregularity notification signal (C22). The second processing part 61 outputs the control content stored in the storage part 62 to the communication control processor (C23). More specifically, in the embodiment, the switching device CD outputs a voltage having a voltage value associated with a set rotation direction in the control content stored in the storage part 62 to the second pin PN2, and outputs a voltage having a voltage value associated with a set speed in the control content stored in the storage part 62 to the fifth pin PN5.

The output control content is input into the communication control processor 4, and the communication control processor 4 controls the motor 3 in accordance with the input control content (S8, C24). More specifically, in the embodiment, when a voltage input into the second pin PN 2 and having a voltage value associated with the set rotation direction indicates 4.5[V] or lower, the Shifter 54 outputs a low-level (Low level) voltage for the set rotation direction indicating the counterclockwise rotation CCW, and the MC-MCU 46 controls the motor 3 via the inverter 41 to give the counterclockwise rotation CCW. When the voltage input into the second pin PN and having the voltage value associated with the set rotation direction indicates 6.5[V] or higher, the Shifter 54 outputs a high-level (Hi level) voltage for the set rotation direction indicating the clockwise rotation CW, and the MC-MCU 46 controls the motor 3 via the inverter 41 to give the clockwise rotation CW. The Shifter 55 outputs a voltage having a voltage value associated with a rotation speed in accordance with a voltage input into the fifth pin PN2 and having a voltage value associated with the set speed. The MC-MCU 46 controls the motor 3 via the inverter 41 to give a rotation speed agreeing with the set speed. This results in controlling the motor 3 to maintain the operation of the conveyor device CS even in the case of the communication irregularity.

Subsequently, the communication control processor 4 determines whether the communication recovers (S8, C25). When a result of the determination shows a communication recovery (Yes), the communication control processor 4 outputs a recovery notification signal showing the communication recovery to the switching device CD (S10, C26), and returns the process to step S1 (C 1). The communication control processor 4 determines the communication recovery on receipt of the communication recovery, i.e., a communication regularity, from the hub MS of the IO-Link master device under the control of the motor 3. By contrast, when the result of the determination shows a non-communication recovery or a communication irregularity (No), the communication control processor 4 returns the process to step S8 (C24). In this way, the control of the motor 3 depending on the output from the switching device CD is continued.

The recovery notification signal is input into the switching device CD, and the switching device CD receives the input recovery notification signal (C28). The second processing part 61 outputs a voltage of 18[V] or higher to the fifth pin PN5 (C28).

This operation enables the conveyor system in the embodiment including the C-M roller MR and the switching device CD to operate the conveyor device CS in a predetermined control manner even when a communication irregularity occurs.

The conveyor system in the embodiment may be adopted for a conveyor device which includes a belt conveyor device in a first modified embodiment. Specifically, the conveyor system in the first modified embodiment includes: a motorized conveyor roller MR; a switching device CD; and a conveyor device which includes a belt conveyor device including a plurality of rollers, the rollers including one or more of the motorized conveyor rollers MR. The motorized conveyor roller MR and the switching device CD in the conveyor system in the first modified embodiment respectively are same as the motorized conveyor roller MR and the switching device CD in the conveyor system in the preceding embodiment, and thus, descriptions therefor are omitted. Hereinafter, a conveyor device which includes a belt conveyor device will be described.

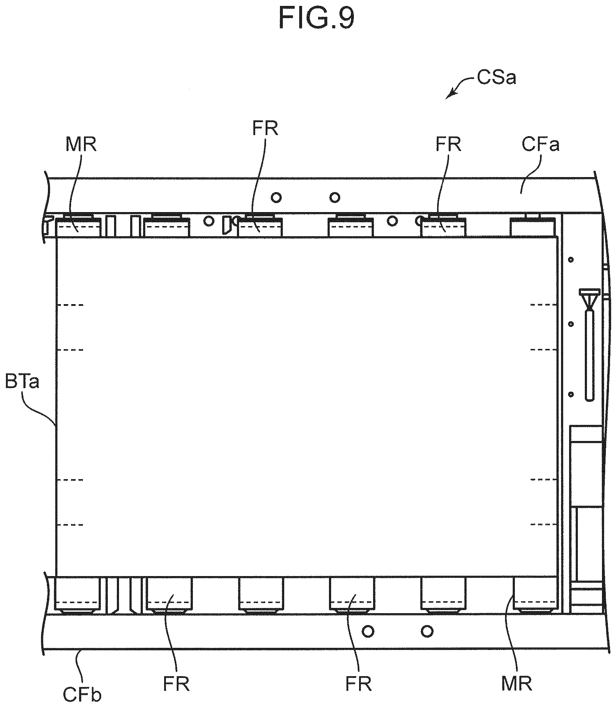

Fig. 9 is a plan view of the conveyor device in the first modified embodiment. As shown in Fig. 9, a conveyor device CSa in the first modified embodiment includes a belt conveyor device including, for example, a plurality of rollers MR, FR juxtaposed in a direction, and a conveyance belt BTa resting on the rollers MR, FR to transfer a target object on a transfer passage defined by the conveyance belt BTa. More specifically, the conveyor device CSa includes a pair of first and second conveyor frame members CFa, CFb, one or more motorized conveyor rollers MR, one or more driven rollers FR, and the conveyance belt BTa. The first and second conveyor frame members CFa, CFb, the motorized conveyor rollers MR, and the driven rollers FR are respectively same as the first and second conveyor frame members CFa, CFb, the motorized conveyor rollers MR, and the driven rollers FR in the preceding embodiment, and thus, the descriptions therefor are omitted.

In this regard, the conveyor device CS in the preceding embodiment includes the C-M rollers MR arranged in every third rows, and the belt BT having a ring or annular shape to connect one end of a C-M roller MR and one end of a driven roller FR adjacent thereto to each other. In comparison with this, in the conveyor device CSa in the first modified embodiment, the rollers located at the opposite positions among the rollers MR, FR juxtaposed in the direction are defined as the CM rollers MR, and a conveyance belt BTa having a large width rests thereon. One or more of the driven rollers FR juxtaposed between the C-M rollers at the opposite positions may be replaced with corresponding one or more C-M rollers.

The first modified embodiment can provide a conveyor system further including a conveyor device which includes a belt conveyor device. The conveyor system including the conveyor device which includes the belt conveyor device enables the conveyor device to operate in a predetermined control manner even when a communication irregularity occurs.

Moreover, although the switching device CD is provided independently of the C-M roller MR in the preceding embodiment and the first modified embodiment, the switching device may be integrated with the C-M roller. In other words, the C-M roller MR may be provided with the switching device CD therein in a second modified embodiment. The C-M roller MR has the operability of the switching device CD, and, for example, includes: a communication part 50; a roller tube 1; a pair of support shafts 2a, 2b located opposite to each other for rotatably supporting the roller tube 1; a motor 3 located in the roller tube 1 for generating a drive force to rotate the roller tube 1; a control part 71 located in the roller tube 1 for controlling the motor 3 in accordance with a control content carried by a control signal received by the communication part 50; and a storage part 72 located in the roller tuber 1 for storing the control content carried by the control signal received by the communication part 50. The control part 71 further determines whether a communication irregularity exists, and controls the motor 3 in accordance with the control content stored in the storage part 72 when the communication irregularity is determined to exist. For instance, as denoted by the dashed line in Fig. 3, the communication control processor 4 may include the control part 71 and the storage part 72 in place of the control part 40 and the first processing part 461.

The second modified embodiment in which the C-M roller MR is provided with the switching device CD therein achieves simplification of the conveyor system.

Alternatively, the switching device CD may be integrally formed with the hub (IO-Link master device) MS in a third modified embodiment.

Various aspects of technologies are disclosed in this specification as described above. Main technologies among them will be summarized below.

A conveyor system according to one aspect includes a motorized conveyor roller and a switching device. The motorized conveyor roller includes: a communication part: a roller tube: a pair of support shafts located opposite to each other for rotatably supporting the roller tube; a motor located in the roller tube for generating a drive force to rotate the roller tube; a control part located in the roller tube for controlling the motor in accordance with a control content carried by a control signal received by the communication part; and a first processing part located in the roller tube for outputting the control content carried by the control signal received by the communication part to the switching device. The switching device includes: a storage part; and a second processing part that stores the control content in the storage part when receiving an input of the control content from the motorized conveyor roller. The first processing part further determines whether a communication irregularity exists, and outputs the communication irregularity to the switching device when the communication irregularity is determined to exist. The second processing part further causes the control part to control the motor in accordance with the stored control content when receiving an input of the communication irregularity from the motorized conveyor roller. In the conveyor system, the communication part preferably includes an interface that selectively executes either bidirectional communication or data input and output. In the conveyor system, the communication part preferably includes an interface complying with an IO-Link standard.

In the conveyor system, the motorized conveyor roller includes the control part that controls the motor therein. The control part controls the motor in accordance with the control content carried by the control signal received by the communication part, and outputs the control content to the switching device. The switching device stores the input control content. The motorized conveyor roller outputs a communication irregularity to the switching device when the communication irregularity is determined to exist, and the switching device causes the control part to control the motor in accordance with the stored control content when receiving an input of the communication irregularity. The control source is switched from a control signal for a communication regularity to the switching device for a communication irregularity as described above. Accordingly, the conveyor system enables the conveyor device to operate in a predetermined control manner even when a communication irregularity occurs.

In another aspect, in the conveyor system, the motorized conveyor roller is provided with the switching device therein. That is to say, the motorized conveyor roller includes: a communication part: a roller tube: a pair of support shafts located opposite to each other for rotatably supporting the roller tube; a motor located in the roller tube for generating a drive force to rotate the roller tube; a control part located in the roller tube for controlling the motor in accordance with a control content carried by a control signal received by the communication part; and a storage part located in the roller tube for storing the control content carried by the control signal received by the communication part. The control part further determines whether a communication irregularity exists, and controls the motor in accordance with the stored control signal when the communication irregularity is determined to exist.

The conveyor system in which the motorized conveyor roller is provided with the switching device therein achieves simplification of the conveyor system.

In another aspect, the conveyor system further includes a conveyor device which includes a roller conveyor device including a plurality of rollers juxtaposed in a direction to transfer a target object on a transfer passage defined by the rollers. The rollers include one or more of the motorized conveyor rollers.

This succeeds in providing a conveyor system further including a conveyor device which includes a roller conveyor device.

In another aspect, the conveyor system further includes a conveyor device which includes a belt conveyor device including a plurality of rollers juxtaposed in a direction and a conveyance belt resting on the rollers to transfer a target object on a transfer passage defined by the conveyance belt. The rollers include one or more of the motorized conveyor rollers.

This succeeds in providing a conveyor system further including a conveyor device which includes a belt conveyor device.

Although the present invention has been fully described by way of the embodiments and examples with reference to the above-described specific examples, it is to be understood that various changes and/or modifications to the embodiments and examples will be apparent to those skilled in the art. Therefore, unless otherwise such changes and modifications to be made by those skilled in the art depart from the scope of the present invention hereinafter defined, they should be construed as being included therein.

### Industrial Applicability

The present invention provides a conveyor system including: a motorized conveyor roller for use in a conveyor device; and a switching device that switches a control source.

## Claims

1. A conveyor system, comprising:
a motorized conveyor roller; and
a switching device, wherein
the motorized conveyor roller includes:
a communication part:
a roller tube:
a pair of support shafts located opposite to each other for rotatably supporting the roller tube;
a motor located in the roller tube for generating a drive force to rotate the roller tube;
a control part located in the roller tube for controlling the motor in accordance with a control content carried by a control signal received by the communication part; and
a first processing part located in the roller tube for outputting the control content carried by the control signal received by the communication part to the switching device,
the switching device includes:
a storage part; and
a second processing part that stores the control content in the storage part when receiving an input of the control content from the motorized conveyor roller,
the first processing part further determines whether a communication irregularity exists, and outputs the communication irregularity to the switching device when the communication irregularity is determined to exist, and
the second processing part further causes the control part to control the motor in accordance with the stored control content when receiving an input of the communication irregularity from the motorized conveyor roller.

2. The conveyor system according to claim 1, wherein the motorized conveyor roller is provided with the switching device therein.

3. The conveyor system according to claim 1 or 2, further comprising a conveyor device which includes a roller conveyor device including a plurality of rollers juxtaposed in a direction to transfer a target object on a transfer passage defined by the rollers, the rollers including one or more of the motorized conveyor rollers.

4. The conveyor system according to claim 1 or 2, further comprising a conveyor device which includes a belt conveyor device including a plurality of rollers juxtaposed in a direction and a conveyance belt resting on the rollers to transfer a target object on a transfer passage defined by the conveyance belt, the rollers including one or more of the motorized conveyor rollers.
